# FASCICULE DE BREVET EUROPEEN

(11) **EP 2 781 162 B1**
(45) Date de publication et mention de la délivrance du brevet: **22.05.2019**
(21) Numéro de dépôt: 14159069.5
(22) Date de dépôt: 12.03.2014
(51) Int. Cl.: A23G 3/28, A21C 15/00, A47J 9/00

(54) **Dispositif de distribution multi-douilles pour produit alimentaire**
Mehrfachdüsen-Ausgabevorrichtung für Lebensmittelprodukt
Multi-nozzle dispensing device for a food product

(30) Priorité: 21.03.2013 FR 1352552
(43) Date de publication de la demande: 24.09.2014
(73) Titulaire: KARIS, 75009 Paris (FR)
(72) Inventeur: Borie, Thomas, 75013 Paris (FR); Jacquelin, Alex, 37320 Luynes (FR); Garilhe, Xavier, 69530 Brignais (FR); Mantelet, Fabrice, 75007 Paris (FR); Bhagat, Amaury, 36000 Châteauroux (FR)
(74) Mandataire: Fédit-Loriot

(56) Documents cités:
- WO-A1-2010/102648
- FR-A- 1 536 501
- GB-A- 252 046
- GB-A- 553 068
- US-A- 2 968 262
- US-A- 3 664 794

## Description

L'invention concerne le domaine des ustensiles pour préparations culinaires. Elle concerne plus particulièrement un dispositif de distribution de produits alimentaires présentant une nature pâteuse ou visqueuse, permettant d'obtenir un cordon décoratif ou de garniture en sortie du dispositif.

Par produit alimentaire présentant une nature pâteuse ou visqueuse, on entend des produits dont l'écoulement ne se réalise pas naturellement à travers un orifice de petite dimension.

A cet égard, les poches à douille sont bien connues en cuisine et en pâtisserie pour dispenser un produit alimentaire, de type crème, pâte pâtissière, etc., sous la forme d'un cordon, notamment pour la décoration ou la garniture d'une préparation culinaire. Elles comportent un contenant, se présentant classiquement sous la forme d'un tronc de cône en un matériau souple déformable formant une poche destinée à contenir le produit alimentaire, dotée d'une ouverture de remplissage et d'une ouverture de distribution, à laquelle est adaptée une douille, généralement métallique, constituant un canal de distribution du produit alimentaire contenu dans la poche et présentant un orifice de sortie pourvu d'une découpe d'extrémité profilée permettant de procurer une forme particulière prédéterminée au cordon de produit sortant de la douille lorsqu'une pression est exercée manuellement sur la poche par l'utilisateur. De la sorte, on injecte le produit à travers la douille en formant un cordon pour orner ou garnir des préparations culinaires.

L'inconvénient de cet ustensile réside toutefois dans la difficulté de pouvoir changer rapidement et facilement de douille, en particulier lorsque la poche est remplie, en fonction de l'effet décoratif souhaité par exemple. On connaît des adaptateurs de douilles permettant de changer de douille et donc de décor lorsque la poche est remplie. Un tel adaptateur, par exemple connu du document de brevet WO2010/102648, comporte une embase destinée à être logée au niveau de l'ouverture de distribution de la poche et servant de support à un embout de douille interchangeable, monté par vissage sur l'embase. Toutefois, cet agencement n'est pas complètement satisfaisant, puisqu'il implique des opérations fastidieuses de vissage et dévissage à chaque changement de douille souhaité. Ensuite, il est courant que l'embout de douille souhaité ne soit pas immédiatement à disposition de l'utilisateur, s'il a été rangé par exemple à un endroit inhabituel, perdu, etc.

De GB-252,046 un dispositif de distribution est connu avec une tête de distribution multi-douilles. Aussi, il existe un besoin pour un dispositif de distribution d'un produit alimentaire visqueux du type précité, qui permette la distribution de ce produit sous la forme d'un cordon de décoration ou de garniture, d'une façon plus flexible et, en particulier, qui permette de changer de douille et donc de décor de façon plus flexible.

A cette fin, la présente invention propose un dispositif de distribution d'un produit alimentaire visqueux sous la forme d'un cordon de décoration ou de garniture, du type comprenant un contenant pour ledit produit visqueux comportant une enveloppe en un matériau souple déformable, ladite enveloppe comprenant une extrémité amont dotée d'une ouverture de remplissage et une extrémité aval dotée d'une ouverture de distribution à laquelle est adapté un embout de raccordement comprenant un passage interne communiquant avec ladite ouverture de distribution et étant apte à recevoir au moins une douille présentant un orifice de sortie pourvue d'une découpe d'extrémité apte à procurer une forme prédéterminée audit cordon de produit. Selon l'invention, le dispositif comprend une tête de distribution comprenant un corps sur lequel est agencée une pluralité de douilles, ledit corps étant lié audit embout de raccordement suivant une liaison pivot apte à guider en rotation ladite tête de distribution autour de l'axe de la liaison entre ledit corps ledit embout de raccordement, de manière à relier sélectivement ledit passage interne dudit embout de raccordement à l'une desdites douilles de ladite pluralité de douilles, comme défini dans la revendication 1.

Grâce à cet agencement, le dispositif de l'invention permet de changer de douille très facilement, simplement en tournant la tête de distribution à douilles multiples relativement à son embout de raccordement, la liaison pivot guidant ce mouvement de rotation de la tête de distribution étant avantageusement conçue pour permettre, lors de la rotation de la tête de distribution, de relier sélectivement une des douilles de la pluralité de douilles au passage interne de l'embout de raccordement et, partant à l'orifice de distribution de l'enveloppe contenant le produit.

Selon l'invention, ladite liaison pivot est constituée d'un logement central interne de forme tronconique ménagé dans ledit corps de ladite tête de distribution et d'un cône d'assemblage dudit embout de raccordement constitué d'un corps creux et formant ledit passage interne, ledit cône d'assemblage étant complémentaire dudit logement central interne et étant destiné à venir s'insérer par glissement dans ledit logement central interne.

Selon ce mode de réalisation, chaque douille de ladite pluralité de douilles est répartie circonférentiellement audit logement central interne, dans lequel elle débouche par un orifice d'entrée de ladite douille apte à être amené en correspondance avec une lumière pratiquée sur la surface conique dudit cône d'assemblage lorsque ladite tête de distribution est guidée en rotation autour dudit cône d'assemblage.

De plus, chaque douille de ladite pluralité de douilles s'étend selon une composante radiale dans l'épaisseur dudit corps de ladite tête de distribution, depuis son dit orifice d'entrée jusqu'à son dit orifice de sortie, opposé audit orifice d'entrée et faisant saillie dudit corps.

Avantageusement, ledit dispositif comprend des moyens d'indication aptes à indiquer visuellement ladite douille sélectivement reliée audit passage interne parmi ladite pluralité de douilles de ladite tête de distribution.

Selon un mode de réalisation, lesdits moyens d'indication comprennent un premier repère visuel disposé sur ledit embout de raccordement et une pluralité de seconds repères visuels disposés sur ladite tête de distribution associés respectivement à ladite pluralité de douilles, ledit premier repère visuel et l'un des seconds repères visuels de ladite pluralité de seconds repères visuels étant destinés à être placés au droit l'un de l'autre pour indiquer ladite douille sélectivement reliée audit passage interne.

De préférence, ladite extrémité aval de ladite enveloppe comporte un filetage externe, ledit embout de raccordement comprenant une bague d'assemblage de forme annulaire, pourvue d'un filetage interne apte à coopérer avec ledit filetage externe pour le montage dudit embout de raccordement sur ladite extrémité aval de ladite enveloppe.

De préférence, ladite enveloppe comprend une base amovible apte à être assemblée à ladite extrémité amont de ladite enveloppe de manière à venir fermer ladite ouverture de remplissage de ladite enveloppe.

De préférence, ladite tête de distribution est formée d'une seule pièce par moulage par injection d'un matériau thermoplastique.

Avantageusement, ladite enveloppe peut être réalisée en un matériau déformable élastiquement de la famille des élastomères thermoplastiques.

D'autres caractéristiques et avantages de l'invention ressortiront clairement de la description qui en est faite ci-après d'un mode de réalisation particulier de l'invention présenté à titre indicatif et nullement limitatif, en référence aux dessins annexés, dans lesquels:

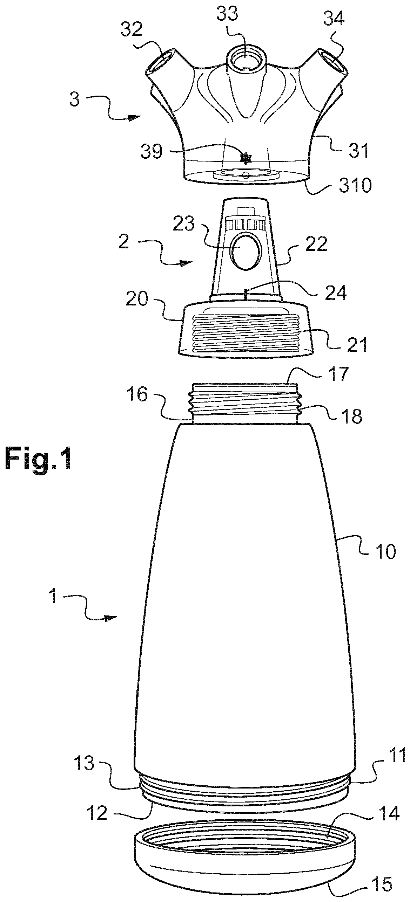

- la Figure 1 est une vue éclatée en perspective d'un dispositif de distribution d'un produit alimentaire visqueux conforme à l'invention ;
- la Figure 2 est une vue de détail en perspective de la tête de distribution à douilles multiples mise en oeuvre dans le dispositif de distribution de produit alimentaire conforme à l'invention.

Le dispositif de distribution d'un produit alimentaire visqueux conforme à l'invention comprend un contenant 1 pour ledit produit, comportant une enveloppe 10 de forme générale tronconique, réalisée préférentiellement en un matériau souple déformable élastiquement approprié pour un usage alimentaire, de type élastomère, par exemple un élastomère thermoplastique du type Santoprène (nom commercial).

L'enveloppe 10 est ouverte à son extrémité amont 11, qui comporte un bord libre 12 délimitant une ouverture de remplissage de l'enveloppe 10 et l'extrémité amont 11 de l'enveloppe 10 est en outre pourvue d'un filetage externe 13, destiné à coopérer avec un filetage interne 14 d'une base amovible 15 de l'enveloppe 10, destinée à venir fermer l'ouverture de remplissage 12 de l'enveloppe 10 lorsqu'elle est assemblée à l'extrémité amont 11 de l'enveloppe 10 par vissage.

L'enveloppe 10 est également ouverte à son extrémité aval 16, opposée à son extrémité amont 11, ladite extrémité aval 16 comportant un bord libre 17 délimitant une ouverture de distribution pour le produit contenu dans l'enveloppe. L'extrémité aval 16 de l'enveloppe 10 est également pourvue d'un filetage externe 18, pour le montage d'un embout de raccordement 2 pour une tête de distribution 3 à douilles multiples. L'embout de raccordement 2, destiné à être rapporté sur l'extrémité aval 16 de l'enveloppe 10 par vissage, comporte pour ce faire une bague d'assemblage 20 de forme annulaire, pourvue sur sa surface cylindrique interne d'un filetage interne 21, apte à coopérer avec le filetage externe 18 de l'extrémité aval 16 de l'enveloppe 10.

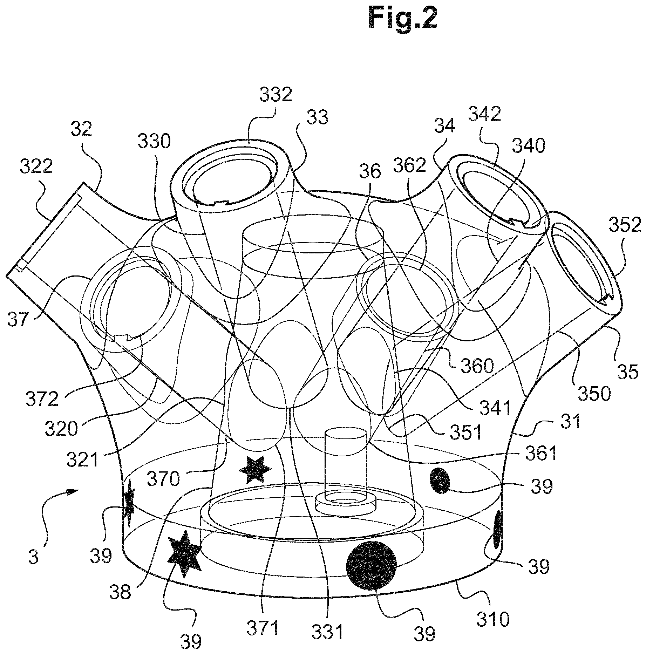

En référence à la figure 2, la tête de distribution 3, destinée à être connectée à l'embout de raccordement 2 selon des modalités qui seront décrites plus en détail ci-après, comporte un corps 31, de forme générale sensiblement cylindrique, sur lequel est agencée une pluralité de douilles, six selon l'exemple de réalisation, respectivement 32 à 37. Plus précisément, l'agencement des douilles 32-37 sur le corps 31 est tel que chacune des douilles 32-37 constitue un canal de distribution indépendant, respectivement 320 à 370, comportant un orifice d'entrée, respectivement 321 à 371, débouchant dans un logement central 38 interne du corps 31, et un orifice de sortie, respectivement 322 à 372, situé à l'opposé de l'orifice d'entrée 321-371, pourvu chacun d'une découpe d'extrémité propre permettant de procurer une forme prédéterminée au cordon de produit distribué, et faisant saillie du corps 31, sensiblement à l'opposé d'un bord libre 310 du corps 31. Chaque canal de distribution 320-370 d'une douille 32-37 est ainsi réparti circonférentiellement au logement central interne 38 du corps 31, dans lequel il débouche par son orifice d'entrée 321-371 et s'étend selon une composante radiale dans l'épaisseur du corps 31 jusqu'à son orifice de sortie 322-372 faisant saillie du corps 31. Le logement central interne 38 du corps 31 est préférentiellement un logement de forme tronconique, qui s'étend dans le corps 31 sur une certaine longueur selon une direction axiale du corps 31 depuis le bord libre 310 du corps 31.

La tête de distribution 3 à douilles multiples est préférentiellement formé en une seule pièce, par exemple par moulage par injection d'un matériau thermoplastique approprié pour un usage alimentaire, par exemple un matériau de type PMMA (polyméthacrylate de méthyle).

Selon l'invention, le corps 31 de la tête de distribution 3 à douilles multiples est prévu pour être lié à l'embout de raccordement 2, suivant une liaison pivot apte à guider en rotation la tête de distribution 3 à douilles multiples autour de l'axe de la liaison entre la tête de distribution 3 à douilles multiples et l'embout de raccordement 2. Selon un mode de mise en oeuvre préféré de cette liaison pivot, l'embout de raccordement 2 est pourvu d'un cône d'assemblage 22 complémentaire du logement central interne 38 de forme tronconique ménagé dans le corps 31 de la tête de distribution 3 à douilles multiples, ledit cône d'assemblage 22 étant destiné à venir s'insérer par glissement dans le logement central interne 38 de forme tronconique. Le cône d'assemblage 22 présente ainsi une surface extérieure conique et une pente identique à celle de la section tronconique du logement central interne 38 ménagé dans le corps 31, de telle sorte que le corps 31 de la tête de distribution 3 à douilles multiples puisse être guidé en rotation autour du cône d'assemblage 22 inséré dans le logement central interne 38. L'axe du cône d'assemblage 22, confondu avec l'axe du logement tronconique 38, constitue ainsi l'axe de la liaison entre la tête de distribution 3 à douilles multiples et l'embout de raccordement 2, autour duquel la tête de distribution 3 à douilles multiples peut être guidée en rotation.

Le cône d'assemblage 22 constitue un corps creux, préférentiellement formé d'une seule pièce avec la bague d'assemblage 20 de l'embout de raccordement 2. L'embout de raccordement 2 pourra également être réalisé par moulage par injection d'une matière plastique thermo-formable de type PMMA par exemple (polyméthacrylate de méthyle). Le cône d'assemblage 22 s'étend donc en direction axiale de celui-ci depuis un bord libre de la bague annulaire 20, opposé à celui destiné à être engagé avec l'extrémité aval 16 de l'enveloppe 10. Le corps creux du cône d'assemblage 22 forme ainsi avec la bague annulaire 20 et en prolongement de celle-ci, un passage interne agencé en communication directe avec l'ouverture de distribution 17 de l'enveloppe 10, lorsque l'embout de raccordement 2 est assemblé à l'enveloppe 10, permettant le passage du produit alimentaire contenu dans l'enveloppe 10. En outre, le cône d'assemblage 22 est pourvu d'une lumière 23 agencée sur la surface conique du cône d'assemblage 22, de manière à pouvoir être amenée en regard de l'un des orifices d'entrée respectifs 321 à 371 des douilles 32 à 37 débouchant dans le logement central interne 38 ménagé dans le corps 31 de la tête de distribution 3 à douilles multiples, lorsque le cône d'assemblage 22 est inséré dans le logement central interne 38 pour former la liaison pivot permettant le montage à rotation de la tête de distribution 3 à douilles multiples sur l'embout de raccordement 2. Grâce à cet agencement, le passage interne ménagé dans l'embout de raccordement 2 et partant, l'orifice de distribution 17 de l'enveloppe 10, peut être relié sélectivement à l'un des orifices d'entrées 321 à 371 des douilles respectives 32 à 37 débouchant dans le logement central interne 38, en guidant en rotation la tête de distribution 3 à douilles multiples autour du cône d'assemblage 22, jusqu'à faire coïncider ledit orifice d'entrée correspondant à la douille souhaitée avec la lumière 23 pratiquée dans la surface conique du cône d'assemblage 22.

Avantageusement, des moyens d'indication sont prévus, permettant d'indiquer visuellement la douille sélectionnée parmi la pluralité de douilles 32 à 37 de la tête de distribution 3. Ces moyens d'indication se présentent préférentiellement sous la forme de repères d'indication visuels complémentaires agencés au niveau d'une part, de l'embout de raccordement 2 et, d'autre part, de la tête de distribution 3 à douilles multiples. Ces repères d'indication visuels complémentaires comportent un premier repère d'indication visuel 24, préférentiellement marqué sur la surface cylindrique externe de la bague annulaire 20, en correspondance avec la position de la lumière 23 sur le cône d'assemblage 22, et une pluralité de seconds repères d'indication visuels 39, préférentiellement marqués sur la surface cylindrique externe du corps 31 de la tête de distribution 3 à douilles multiples, à proximité du bord libre 310 du corps 31, en correspondance respectivement avec la position de l'orifice d'entrée 321 à 371 de la pluralité de douilles 32 à 37 agencées sur la tête de distribution 3. Ainsi, la sélection d'une douille consiste à amener celui des seconds repères visuels 39 de la tête de distribution 3 à douilles multiples associé à ladite douille au droit du premier repère visuel 24 de l'embout de raccordement 2, par rotation de la tête de distribution 3 relativement à l'embout de raccordement. De la sorte, la mise au droit du second repère visuel 39 associé à la douille sélectionnée avec le premier repère visuel 24, indique la mise en correspondance de la lumière 23 avec l'orifice d'entrée de la douille sélectionnée et partant, la connexion de la douille sélectionnée avec l'ouverture de distribution 17 de l'enveloppe 10 via le passage interne de l'embout de raccordement 2.

Chacun des seconds repères visuels 39 pourra en outre être avantageusement constitué d'un pictogramme apte à représenter le profil de la découpe d'extrémité de l'orifice de sortie de la douille associée, de manière à faciliter le choix de la douille pour l'utilisateur.

Ainsi, conformément à ce qui précède, lorsque qu'une certaine pression sera exercée par l'utilisateur sur l'enveloppe 10 contenant le produit alimentaire, ce dernier sera donc éjecté de l'enveloppe 10 depuis son ouverture de distribution 17 par l'intermédiaire de la douille 32 à 37 de la tête de distribution 3 à douilles multiples, qui aura été sélectivement reliée au passage interne de l'embout de raccordement 2, par la mise en correspondance de son orifice d'entrée avec la lumière 23 du cône d'assemblage 22. Par quoi, on peut sélectionner une douille et surtout passer à loisir d'une douille à l'autre parmi la pluralité de douilles de la tête de distribution 3 à douilles multiples, en fonction de la forme du cordon souhaitée par exemple et ce, très rapidement et très facilement, par un simple guidage en rotation de la tête de distribution 3 à douilles multiples autour de l'axe de la liaison avec son embout de raccordement 2 selon les modalités exposées plus haut. L'agencement de l'invention permet donc d'éviter toutes opérations laborieuses de vissage et dévissage de douilles, et facilite en outre la mise à disposition des douilles dans la mesure où l'on dispose d'un jeu de douilles multiples intégré par construction à la tête de distribution 3 connectée à l'embout de raccordement 2.

## Revendications

1. Dispositif de distribution d'un produit alimentaire visqueux sous la forme d'un cordon de décoration ou de garniture, du type comprenant un contenant (1) pour ledit produit visqueux comportant une enveloppe (10) en un matériau souple déformable, ladite enveloppe (10) comprenant une extrémité amont (11) dotée d'une ouverture de remplissage (12) et une extrémité aval (16) dotée d'une ouverture de distribution (17) à laquelle est adapté un embout de raccordement (2) comprenant un passage interne communiquant avec ladite ouverture de distribution (17) et étant apte à recevoir au moins une douille présentant un orifice de sortie pourvue d'une découpe d'extrémité apte à procurer une forme prédéterminée audit cordon, et une tête de distribution (3) comprenant un corps (31) sur lequel est agencée une pluralité de douilles (37-37), ledit corps (31) étant lié audit embout de raccordement (2) suivant une liaison pivot apte à guider en rotation ladite tête de distribution (3) autour de l'axe de la liaison entre ledit corps (31) et ledit embout de raccordement (2), de manière à relier sélectivement ledit passage interne dudit embout de raccordement (2) à l'une desdites douilles de ladite pluralité de douilles (32-37), **caractérisé par** ladite liaison pivot étant constituée d'un logement central interne (38) de forme tronconique ménagé dans ledit corps (31) de ladite tête de distribution (3) et d'un cône d'assemblage (22) dudit embout de raccordement (2), constitué d'un corps creux formant ledit passage interne, ledit cône d'assemblage (22) étant complémentaire dudit logement central interne (38) et étant destiné à venir s'insérer par glissement dans ledit logement central interne (38), chaque douille de ladite pluralité de douilles (32-37) étant répartie circonférentiellement audit logement central interne (38), dans lequel elle débouche par un orifice d'entrée (321-371) de ladite douille apte à être amené en correspondance avec une lumière (23) pratiquée sur la surface conique dudit cône d'assemblage (22) lorsque ladite tête de distribution (3) est guidée en rotation autour dudit cône d'assemblage (22), chaque douille de ladite pluralité de douilles (32-37) s'étendant selon une composante radiale dans l'épaisseur dudit corps (31) de ladite tête de distribution (3) depuis son dit orifice d'entrée (321-371) jusqu'à son dit orifice de sortie (322-372), opposé audit orifice d'entrée (321-371) et faisant saillie dudit corps (31).

2. Dispositif selon la revendication 1, **caractérisé en ce qu'**il comprend des moyens d'indication aptes à indiquer visuellement ladite douille sélectivement reliée audit passage interne parmi ladite pluralité de douilles (32-37) de ladite tête de distribution (3).

3. Dispositif selon la revendication 2, **caractérisé en ce que** lesdits moyens d'indication comprennent un premier repère visuel (24) disposé sur ledit embout de raccordement (2) et une pluralité de seconds repères visuels disposés sur ladite tête de distribution (3) associés respectivement à ladite pluralité de douilles, ledit premier repère visuel et l'un des seconds repères visuels de ladite pluralité de seconds repères visuels étant destinés à être placés au droit l'un de l'autre pour indiquer ladite douille sélectivement reliée audit passage interne.

4. Dispositif selon l'une quelconque des revendications précédentes, **caractérisé en ce que** ladite extrémité aval (16) de ladite enveloppe (10) comporte un filetage externe (18), ledit embout de raccordement (2) comprenant une bague d'assemblage (20) de forme annulaire, pourvue d'un filetage interne (21) apte à coopérer avec ledit filetage externe (18) pour le montage dudit embout de raccordement (2) sur ladite extrémité aval (16) de ladite enveloppe (10).

5. Dispositif selon l'une quelconque des revendications précédentes, **caractérisé en ce que** ladite enveloppe (10) comprend une base amovible (15) apte à être assemblée à ladite extrémité amont (11) de ladite enveloppe (12) de manière à venir fermer ladite ouverture de remplissage (12) de ladite enveloppe (10).

6. Dispositif selon l'une quelconque des revendications précédentes, **caractérisé en ce que** ladite tête de distribution (3) est formée d'une seule pièce par moulage par injection d'un matériau thermoplastique.

7. Dispositif selon l'une quelconque des revendications précédentes, **caractérisé en ce que** ladite enveloppe (10) est réalisée en un matériau déformable élastiquement de la famille des élastomères thermoplastiques.

## Patentansprüche

1. Vorrichtung zum Verteilen eines viskosen Lebensmittelprodukts in Form einer Dekorations- oder Garnierungsschnur, umfassend
einen Behälter für das viskose Produkt, der eine Hülle (10) aus einem flexiblen, verformbaren Material umfasst, wobei die Hülle (10) ein mit einer Einfüllöffnung (12) versehenes, stromaufwärtiges Ende (11) und ein mit einer Verteilungsöffnung (17) versehenes stromabwärtiges Ende (16) umfasst, wobei an die Verteilungsöffnung ein Verbindungsstutzen (2) angepasst ist, der einen inneren Durchgang umfasst, der mit der Verteilungsöffnung (17) in Verbindung steht und dafür ausgelegt ist, mindestens eine Buchse aufzunehmen, die eine Auslassöffnung aufweist, die mit einem Endabschnitt versehen ist, der dafür ausgelegt ist, der Schnur eine vorbestimmte Form zu verleihen, und
einen Verteilerkopf (3), der einen Körper (31) umfasst, auf dem eine Mehrzahl von Buchsen (32-37) angeordnet ist, wobei der Körper (31) mit dem Verbindungsstutzen (2) mit einer Drehverbindung verbunden ist, die dafür ausgelegt ist, den Verteilerkopf (3) um die Verbindungsachse zwischen dem Körper (31) und dem Verbindungsstutzen (2) so zu drehen, dass der innere Durchgang des Verbindungsstutzens (2) selektiv mit einer der Buchsen der Mehrzahl von Buchsen (32-37) verbunden wird, **dadurch gekennzeichnet,**
**dass** die Drehverbindung besteht aus einem inneren, zentralen, kegelstumpfförmigen Gehäuse (38), das im Körper (31) des Verbindungsstutzens (2) des Verteilerkopfs (3) ausgebildet ist, und einem Montagekegel (22) des Verbindungsstutzens (2), der aus einem den inneren Durchgang bildenden, hohlen Körper besteht, wobei der Montagekegel (22) komplementär zum inneren, zentralen Gehäuse (38) ist und dafür bestimmt ist, durch eine Gleitbewegung in das innere, zentrale Gehäuse (38) eingeführt zu werden, wobei jede der Mehrzahl von Buchsen (32-37) am Umfang des inneren, zentralen Gehäuses (38) verteilt ist, in das sie durch eine Einlassöffnung (321-371) der Buchse mündet, die so ausgebildet ist, dass sie in Übereinstimmung mit einem an der konischen Oberfläche des Montagekegels (22) ausgebildeten Schlitz (23) gebracht werden kann, wenn der Verteilerkopf (3) in Drehbewegung um den Montagekegel (22) gebracht wird, wobei sich jede Buchse der Mehrzahl von Buchsen (32-37) gemäß einer radialen Komponente in der Dicke des Körpers (31) des Verteilerkopfs (3) von seiner Einlassöffnung (321-371) bis zu seiner Auslassöffnung (322-372), die der Einlassöffnung (321-371) gegenüber liegt und vom Körper (31) vorsteht, erstreckt.

2. Vorrichtung nach Anspruch 1, **dadurch gekennzeichnet, dass** sie Anzeigemittel umfasst, die dafür ausgelegt sind, visuell die Buchse anzuzeigen, die selektiv mit dem inneren Durchgang unter der Mehrzahl von Buchsen (32-37) des Verteilerkopfs (3) verbunden ist.

3. Vorrichtung nach Anspruch 2, **dadurch gekennzeichnet, dass** die Anzeigemittel einen ersten visuellen Hinweis (24), der am Verbindungsstutzen (2) angeordnet ist, und eine Mehrzahl von zweiten visuellen Hinweisen, die am Verteilerkopf (3) in entsprechender Zuordnung zu der Mehrzahl von Buchsen angeordnet sind, umfassen, wobei der erste visuelle Hinweis und einer der Mehrzahl von zweiten visuellen Hinweisen dazu bestimmt sind, in einer Linie angeordnet zu werden, um anzuzeigen, dass die Buchse selektiv mit dem inneren Durchgang verbunden ist.

4. Vorrichtung nach einem der vorstehenden Ansprüche, **dadurch gekennzeichnet, dass** das stromabwärtige Ende (16) der Hülle (10) ein Außengewinde (18) aufweist, wobei der Verbindungsstutzen (2) einen Montagering (20) aufweist, der mit einem Innengewinde (21) versehen ist, das dafür ausgelegt ist, mit dem Außengewinde (18) zusammenzuwirken, um die Montage des Verbindungsstutzens (2) am stromabwärtigen Ende (16) der Hülle (10) vorzunehmen.

5. Vorrichtung nach einem der vorstehenden Ansprüche, **dadurch gekennzeichnet, dass** die Hülle (10) eine abnehmbare Basis (15) umfasst, die dafür ausgelegt ist, am stromaufwärtigen Ende (11) der Hülle (10) so montiert zu werden, dass die Einfüllöffnung (12) der Hülle (10) verschlossen wird.

6. Vorrichtung nach einem der vorstehenden Ansprüche, **dadurch gekennzeichnet, dass** der Verteilerkopf (3) einstückig durch Spritzgießen aus einem thermoplastischen Material gebildet ist.

7. Vorrichtung nach einem der vorstehenden Ansprüche, **dadurch gekennzeichnet, dass** die Hülle (10) aus einem elastisch verformbaren Material aus der Gruppe der thermoplastischen Elastomeren gebildet ist.

## Claims

1. A dispensing device for a viscous foodstuff in the shape of a decoration cord or a trimming, of the type comprising a container (1) for said viscous product having an envelope (10) made of a deformable flexible material, said envelope (10) comprising an upstream end (11) provided with a filling opening (12) and a downstream end (16) provided with a dispensing opening (17) to which is adapted a connecting tip (2) comprising an internal pathway communicating with said dispensing opening (17) and being intended to receive at least a nozzle having an outlet provided with an end cutting intended to provide a predetermined form to said cord, and
a dispensing head (3) comprising a body (31) on which a plurality of nozzles (37-37) is arranged, said body (31) being connected to said connecting tip (2) with a swiveling connection intended to rotationally guide said dispensing head (3) about the axis of the connection between said body (31) and said connecting tip (2), so as to selectively connect said internal pathway of said connecting tip (2) to one of said nozzles of said plurality of nozzles (32-37), **characterized by**
said swiveling connection being constituted by an internal central housing (38) of a truncated form provided within said body (31) of said dispensing head (3) and an assembly cone (22) for said connecting tip (2), made up from a hollow body forming said internal pathway, said assembly cone (22) being complementary to said internal central housing (38) and being intended to slidingly fit into said internal central housing (38), each nozzle of said plurality of nozzles (32-37) being circumferentially distributed to said internal central housing (38), into which it emerges by an inlet (321-371) of said nozzle intended to be brought in correspondence with a lumen (23) provided on the conical surface of said assembly cone (22) when said dispensing head (3) is rotationally guided about said assembly cone (22), each nozzle of said plurality of nozzles (32-37) extending according to a radial component within the thickness of said body (31) of said dispensing head (3) from its said inlet (321-371) to its said outlet (322-372), opposed to said inlet (321-371) and extending from said body (31).

2. The device according to claim 1, **characterized in that** it comprises indicating means intended to visually indicate said nozzle selectively connected to said internal pathway among said plurality of nozzles (32-37) of said dispensing head (3).

3. The device according to claim 2, **characterized in that** said indicating means comprise a first visual mark (24) laid out on said connecting tip (2) and a plurality of second visual marks laid out on said dispensing head (3) respectively associated with said plurality of nozzles, said first visual mark and one of the second visual marks of said plurality of second visual marks being intended to be placed the one facing to the other to indicate said nozzle selectively connected to said internal pathway.

4. The device according to any of preceding claims, **characterized in that** said downstream end (16) of said envelope (10) is provided with an external threading (18), said connecting tip (2) comprising an assembly ring (20) in an annular shape, provided with an internal threading (21) intended to cooperate with said external threading (18) in order to mount said connecting tip (2) to said downstream end (16) of said envelope (10).

5. The device according to any of preceding claims, **characterized in that** said envelope (10) comprises a removable basis (15) intended to be fitted at said upstream end (11) of said envelope (12) so as to be able to close said filling opening (12) of said envelope (10).

6. The device according to any of preceding claims, **characterized in that** said dispensing head (3) is made in only one part by injection molding of a thermoplastic material.

7. The device according to any of preceding claims, **characterized in that** said envelope (10) is made from an elastically deformable material of the thermoplastic elastomers family.
